# EUROPEAN PATENT APPLICATION

(11) **EP 1 548 926 A2**
(43) Date of publication of application: **29.06.2005**
(21) Application number: 04030468.5
(22) Date of filing: 22.12.2004
(51) Int. Cl.: H02P 6/08

(54) **Device for driving a direct current motor**

(30) Priority: 24.12.2003 JP 2003428203
(71) Applicant: Aisin Seiki Kabushiki Kaisha, Kariya-shi, Aichi-ken 448-8650 (JP)
(72) Inventor: Hidaka, Seiji Aisin Seiki Kabushiki Kaisha, Kariya-shi Aichi-ken, 448-8650 (JP)
(74) Representative: Leson, Thomas Johannes Alois, Dipl.-Ing.

(57) **Abstract**

A direct current motor (11) has plural coils (16, 17, 18) and is rotationally driven by selectively switching a phase of the coils in which electricity is flowing. A drive control device (12) for the direct current motor controls an amount of electricity applied to the coil in the phase by connecting a first terminal of the coil in the phase to a first pole of a direct current source (27) and by connecting a second terminal of the coil in the phase for a duration of a period (T1) corresponding to an on-duty cycle of a predetermined pulse width modulation period (T) of the phase. The drive control device includes a braking means for setting a brake condition to the motor by short-circuiting the coils by connecting another coil in a phase in which electricity is not flowing to the first pole of the direct current source.

## Description

### FIELD OF THE INVENTION

This invention generally relates to a drive control device. More specifically, this invention generally relates to a drive control device for a direct current motor.

### BACKGROUND

Conventionally, as shown in a document entitled "New brushless motors", on pages 64 to 66, written by Takashi Kenjo and Shigenobu Nagamori, and published by the Sogo-Denshi Shuppan-Sha in Tokyo, in June, 2000, a direct current motor such as a brushless motor can be driven and controlled by control, on the basis of pulse width modulation (PWM) of a substantial flow of current in a coiled wire of a phase in which electricity is flowing. In the drive and control of the direct current motor by PWM, driving takes place for a period equivalent to an on-duty cycle of PWM, and control of driving is undertaken so as to result in a free state, a state of inertia, corresponding to an off-duty cycle of PWM.

However, there is a danger that a direct current motor, driven and controlled in the way described above, will increase speed as a result of factors such as external force thrusting the direct current motor into a state of being pushed. Specifically, a simple calculation produces a rotational speed of a direct current motor, with a maximum rotational speed of 10000 rpm, being driven at a 50% duty ratio (a ratio related to time), without its load (i.e. no external pressure) of 5000 rpm (=10000 rpm x50%). However, if the direct current motor is pushed by external force, its rotational speed rises above 5000 rpm. In particular, if the direct current motor is pushed by an external force during periods corresponding to off-duty cycles of PWM, in which the direct current motor is in a free state (a state of inertia), the direct current motor is adversely affected by the external force.

In other words, in the face of external disturbances such as external force, the degree of stability of a direct current motor is low. Moreover, in a system in which it is difficult to monitor external disturbances, the controllability of the direct current motor becomes adversely affected to a significant degree by such external disturbances, and smooth driving of the direct current motor becomes difficult. Even in the case of a system in which monitoring of external influences is undertaken, the control system itself becomes complex, and modifications to the control system become complicated.

A need thus exists for a drive control device for a direct current motor which provides enhanced stability for the direct current motor in the face of external disturbances, but which avoids complications inherent in a complex structure. The present invention has been made in view of the above circumstances and provides such a drive control device.

### SUMMARY OF THE INVENTION

According to an aspect of the present invention, a direct current motor (11) has plural coils (16, 17, 18) and is rotationally driven by selectively switching a phase of the coils in which electricity is flowing. A drive control device (12) for the direct current motor controls an amount of electricity applied to the coil in the phase by connecting a first terminal of the coil in the phase to a first pole of a direct current source (27) and by connecting a second terminal of the coil in the phase for a duration of a period (T1) corresponding to an on-duty cycle of a predetermined pulse width modulation period (T) of the phase. The drive control device includes a braking means for setting a brake condition to the motor by short-circuiting the coils by connecting another coil in a phase in which electricity is not flowing to the first pole of the direct current source.

According to another aspect of the present invention, a drive control device (12) for a direct current motor (11) includes a detecting means (14) for detecting a rotational position of a rotor, a calculating means (13) for calculating a duration of a period (T1) of an on-duty cycle of a predetermined pulse width modulation period (T) so as to ensure that the detected rotational position matches a target rotational position, a switching means (21-23, 24-26) for switching a connection between plural coils (16, 17 18) and a first pole and a second pole of a direct current source (27), and a controlling means (12) for outputting control signals (UH, VH, WH, UL, VL, WL) to the switching means, for rotating the rotor by selectively switching a phase of the coils in which electricity is flowing, and by connecting a first terminal of the coil in the phase to a first pole of the direct current source and by connecting a second terminal of the coil in the phase to a second pole of the direct current source for a duration of the period corresponding to the calculated on-duty cycle of the predetermined pulse-width modulation period set for the phase of the coil. The control means outputs the control signals for setting brake condition of the motor by short-circuiting the coils by connecting the coil in a phase in which electricity is not flowing to the first pole of the direct current source.

According to another aspect of the present invention, a direct current motor (11) has plural coils and is rotationally driven by selectively switching a phase of the coils in which electricity is flowing in accordance with a drive condition of the motor. The drive control deice for the direct current motor connects a first terminal of the coil in the phase to a first pole of a direct current source (27) and connects a second terminal of the coil in the phase to a second pole of the direct current source by a switching means (21-23, 24-26). The connection between the coil in the phase and the first pole and the second pole of the direct current source is controlled by a switching element (21-23, 24-26).

According to another aspect of the present invention, a stability of the direct current motor can be enhanced in the face of external disturbances, and thus enhancement of stability can serve to avoid complications inherent in a complex structure.

### BRIEF DESCRIPTION OF THE DRAWINGS

The foregoing and additional features and characteristics of the present invention will become more apparent from the following detailed description considered with reference to the accompanying drawings, wherein:
Fig. 1 represents a block diagram illustrating an embodiment of the present invention.
Fig. 2 represents a timing chart illustrating a control configuration of the embodiment of the present invention.
Fig. 3 also represents a timing chart illustrating a control configuration of the embodiment of the present invention.
Fig. 4 represents a timing chart illustrating a transition of an actual rotational position relative to a target rotational position of a direct current motor.
Fig. 5 also represents a timing chart illustrating a transition of an actual rotational position relative to a target rotational position of a direct current motor according to the embodiment of the present invention.

### DETAILED DESCRIPTION

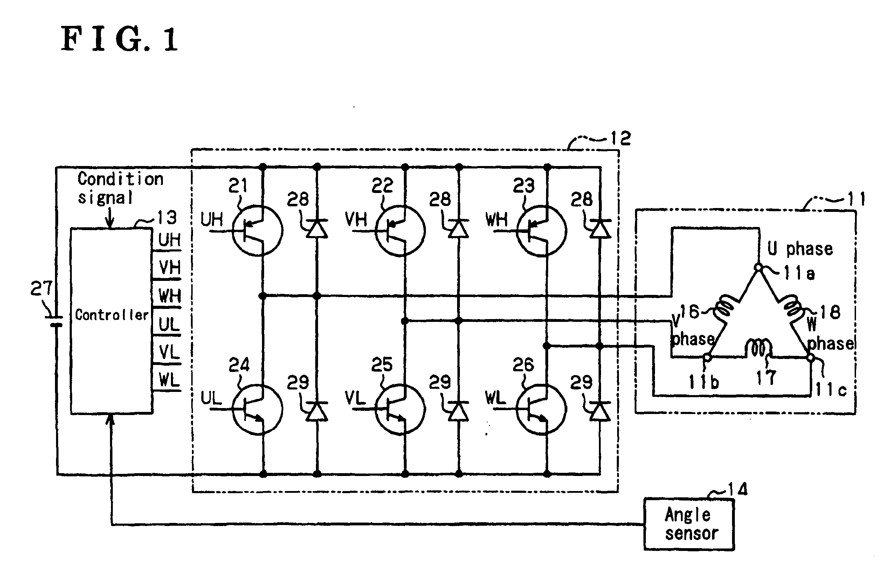

One embodiment of the present invention will be explained below with reference to the illustrations of the drawing figures. Fig. 1 represents a block diagram illustrating a brushless motor system to which the present invention is applied. As shown in the figure, the brushless motor system includes a brushless motor 11 as a three-phase direct current motor, a motor driver 12 including inverter circuits, and controller 13.

The brushless motor 11 includes a first phase coil 16, a second phase coil 17 and a third phase coil 18, each coiled around a stator at predetermined angles. A rotor to which a magnet is fixed at each predetermined angle is supported by a shaft and surrounded by the stator. A connecting portion of the first coil 16 and the third coil 18, a connecting portion of the first coil 16 and the second coil 17, a connecting portion of the second coil 17 and the third coil 18 are respectively a U phase terminal 11a, a V phase terminal 11b, and a W phase terminal 11c. The brushless motor 11 is connected to the motor driver 12 through the U phase terminal 11a, the V phase terminal 11b and the W phase terminal 11c.

The motor driver 12 includes first switching elements 21, 22, 23 having a PNP transistor, or a similar device, and second switching elements 24, 25, 26 having an NPN transistor, or a similar device. The U phase terminal 11a, the V phase terminal 11b, and the W phase terminal 11c are connected to collectors of the first switching elements 21-23 respectively and connected, through emitters of the switching elements, to a positive pole (a first pole) of a direct current source 27. The U phase terminal 11a, the V phase terminal 11b and the W phase terminal 11c are connected to collectors of the second switching elements 24-26 respectively, and connected, through emitters of the switching elements, to a negative pole (a second pole) of the direct current source 27. Bases of the first and second switching elements 21-26 are respectively connected to the controller 13. ON/OFF status of the first and second switching elements 21-26 are controlled by control signals UH, VH, WH, UL, VL, WL output by the controller 13 to the bases of the first and second switching elements.

The U phase terminal 11a, the V phase terminal 11b and the W phase terminal 11c are connected to the positive pole of the direct current source 27 through flywheel diodes 28, and are respectively connected to the negative pole of the direct current source 27 through flywheel diodes 29.

The controller 13 controls rotational drive of the brushless motor 11 by virtue of controlling the supply of electric to the first phase coil 16, to the second phase coil 17, and to the third phase coil 18, by means of the emission of control signals UH, VH, WH, UL, VL, and WL. In other words, signals appropriate for various conditions are input into the controller 13 for monitoring a drive condition of the brushless motor 11. An angle sensor 14, for sensing an actual rotational position θr of the brushless motor 11, is also connected to the controller 13. By means of the emission of control signals UH, VH, WH, UL, VL, and WL, the controller 13 controls levels (electric potential) of the U phase terminal 11a, the V phase terminal 11b, and the W phase terminal 11c. Further, the controller 13 sequentially switches directions of currents flowing into the first phase coil 16, into the second phase coil 17 and into the third phase coil 18. Thus, a phase in which electricity is flowing can be selectively switched, and a rotational drive of the brushless motor 11 can thus be controlled. Furthermore, simultaneously with the control of switching a phase in which electricity is flowing, the controller 13 controls control signals UH, VH, WH, UL, VL and WL by PWM, on the basis of a difference between a target rotational position θt obtained by the condition signal input and the actual rotational position θr sensed by the angle sensor 14, using for the purpose a known feedback control such as a PID control for controlling the rotational drive of the brushless motor 11 in such a way that the two rotational positions come to match one another.

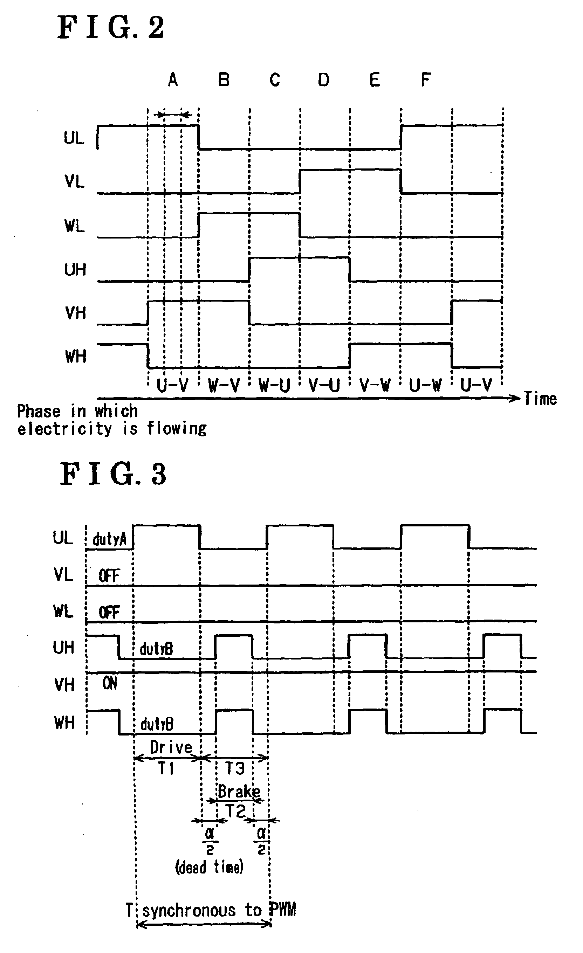

At this point, control, by the controller 13, of the switching of the phases in which electricity is flowing will be explained, on the basis of a timing chart of the control signals UH, VH, WH, UL, VL, and WL illustrated in Fig. 2. In the chart, high-level control signals represent an ON state of the corresponding switching elements. As shown in the figure, in the brushless motor system, there are 6 patterns (phase switching patterns), A-F, based on vibrations of levels of the control signals. For example, in pattern A, the control signals UL and VH are high-level. Accordingly, the U phase terminal 11a is electrically connected, through the second switching element 24, to the negative pole of the direct current source 27, and the V phase terminal 11b is electrically connected, through the first switching element 22, to the positive pole of the direct current source 27. The first phase coil 16 is selected as a phase in which electricity is flowing, and the second phase coil 17 and the third phase coil 18 are selected as phases in which there is no flow of electricity.

The controller 13 controls the rotational drive of the brushless motor 11 by sequentially switching the patterns A-F. Periods of duration for patterns A-F are set to within a certain ms range, a range which is sufficiently long in relation to a period of PWM control of the phase in which electricity is flowing (predetermined PWM period: T). Then, in each pattern, the PWM control is performed on the coils 16-18 of the phase in which electricity is flowing as follows.

Fig. 3 represents a timing chart illustrating the PWM control of the control signals UH, VH, WH, UL, VL and WL. The figure shows an expanded version of a section of pattern A in terms of time. Pattern A will be explained as an example, and it may be assumed that the remaining patterns B-F could be explained in a similar fashion to that of pattern A.

As shown in the chart, the control signal VH emitted by the controller 13 is always set to the high-level. Thus, by means of the first switching element 22, the V phase terminal 11b (a first side terminal) constantly maintains a state of electrical connection with the positive pole of the direct current source 27. On the other hand, in period T1 corresponding to an on-duty cycle of a duty A set in the every PWM period T, the control signal UL is set by the controller 13 to the high-level. During the same period T1, the U phase terminal 11a (a second side terminal) is electrically connected, by means of the second switching element 24, with the negative pole of the direct current source 27. During the period T1, in the same way as in a conventional technique, the other control signals UH, WH, VL, and WL are all set to a low level, and the first switching elements 21, 23 and the second switching elements 25, 26, respectively connected to the coils 17, 18, remain in a state in which electricity is not flowing. During the period T1, the brushless motor 11 is set to a drive condition. In other words, in the embodiment, a low side drive is employed, that is, the PWM control of the phase in which an electric current is flowing is performed by setting a duty of the negative terminal side of the direct current source 27.

In the same way as in the conventional technique, in pattern A, the control signals VL and WL are always set to the low-level. Further, in the embodiment, in a period T2 corresponding to an on-duty cycle of a duty B set by the controller 13 in the every PWM period T, the control signals UH and WH are set to the high-level. During the same period T2, the U phase terminal 11a and the W phase terminal 11c are electrically connected, through the first switching elements 21 and 23, to the positive pole of the direct current source 27, in the same way as in the case of the V phase terminal 11b described above. The period T2 is set by the controller 13, to overlap with a period T3 (=T-T1) corresponding to an off-duty cycle set in the every PWM period T, and to be shorter than the same period T3 only by a predetermined time α. In other words, the period T2 is set to start by a predetermined time α/2 after a starting time of the period T3 and to be completed before a time of completion (the starting time of the following PWM period T).

During the period T2, the U phase terminal 11a, the V phase terminal 11b and the W phase terminal 11c are all electrically connected to the positive terminal of the direct current source 27 and short-circuited. Thus, the brushless motor 11 is set to a brake condition (in Fig. 3, a state in which control signals from UH, VH and WH are in an ON state, in other words, a state in which the first switching elements are in an ON state). During the period T3, corresponding to an off-duty cycle, when the brushless motor 11 is in a free state (state of inertia), the brake condition set for the brushless motor 11 inhibits acceleration of the motor caused by being pushed by an external force. At this time, the drive conditions and the brake conditions of the brushless motor 11 are alternately repeated over a short period of time (at a high frequency) within the PWM period T. The reason why predetermined dead times α/2 are set, in relation to period T3 before and after the period T2 is to be able to inhibit with a greater degree of certainty any short-circuit during the period of the switch from the drive condition to the brake condition.

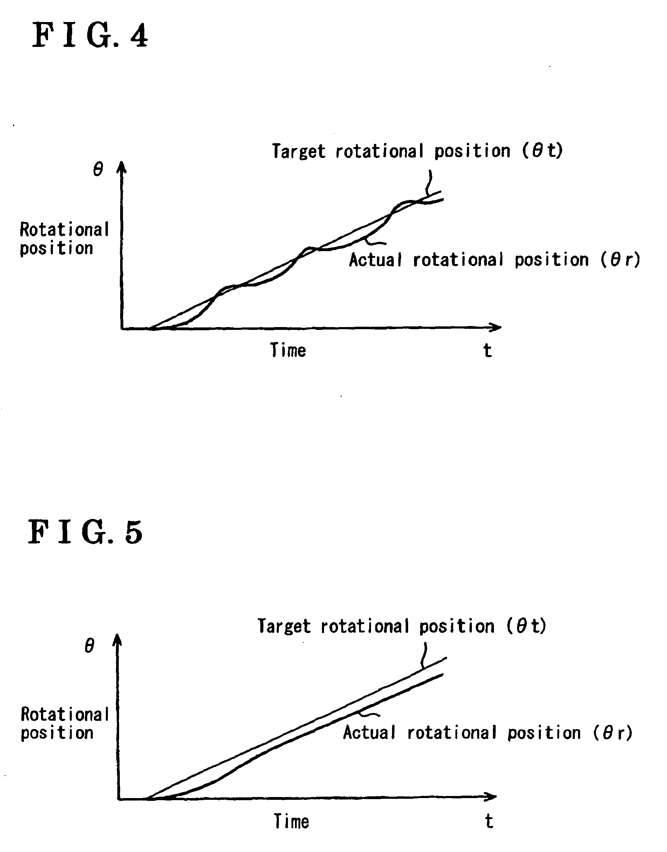

Next, an actuation in the embodiment will be explained with reference to Figs. 4 and 5. Each of Figs. 4 and 5 represents a timing chart illustrating transition of the target rotational position θt and the actual rotational position θr at a time when the direct current motor is pushed by an external force. Fig. 4 represents a timing chart illustrating transition in a conventional arrangement in which only driving of the direct current motor takes place during a period corresponding to an on-duty cycle of the PWM period T of a phase in which electricity is flowing. Fig. 5 represents a timing chart illustrating transition in the embodiment with the setting of the brake during the period corresponding to the off-duty cycle of the PWM period, in addition to the actuation described above. The rotational positions shown in Figs. 4 and Figs. 5 indicate transitions over periods of a sufficiently longer durations than the PWM period T.

As illustrated in Fig. 4, in a conventional arrangement in which the direct current motor is only driven, when pushed by an external force, the actual rotational position θr of the current direct motor hunches in relation to the target rotational position θt. In other words, it can be confirmed that the actual rotational position θr goes beyond the target rotational position θt. Moreover, hunching of this kind can be the cause of noise and vibrations because the hunching extends over a longer period of time than the PWM cycle T (because it results in a low frequency). On the other hand, as shown in Fig. 5, when drive conditions and brake conditions are repeated, as in the embodiment, even when the brushless motor is pushed by an external force, the actual rotational position θr transits approximately along the target rotational position θt, except in so far that because of the influence of the brake, the degree of change in the actual rotational position θr is less than that of the target rotational position θt. It has also been confirmed that the difference between the target rotational position θt and the actual rotational position θr can be confined within an approved scope which does not adversely affect control of the brushless motor.

In the embodiment, even when a conventional motor control (PID control, or the like, is used), control of the rotational position can basically be exercised only by setting the brake condition described above and thereby inhibiting the influence of an external force. By repeating a drive condition and a brake condition over extremely short periods included within the PWM period T, the generation of noise and vibrations can also be inhibited.

As described above, according to the embodiment of the present invention, the following effects can be obtained. In the embodiment, the brake condition can be set by connecting the coil of a phase in which electricity is not flowing to the positive pole of the direct current source 27, thus short-circuiting the coils 16-18 of plural phases during the period T3 corresponding to the off-duty cycle, within the PWM period T, of the phase in which electricity is flowing. Accordingly, even during the period T3, corresponding to the off-duty cycle, within the PWM period, of the phase in which electricity is flowing, free condition (state of inertia) of the brushless motor 11 can be inhibited and driving stability of the brushless motor, in the face of external disturbances such as external force, can be enhanced. Further, in order to short-circuit the coils 16-18 of plural phases during the period T3, corresponding to the off-duty cycle of the PWM period T of the phase in which electricity is flowing, stability of the brushless motor 11 can be further improved by means of a simple structure for connecting the coil of a phase in which electricity is not flowing to the positive terminal of the direct current source 27. In other words, stability of the brushless motor 11 can be enhanced by using a conventional system such as PID control, incorporating only minor modifications.

In the embodiment, the dead time (α/2) was set, immediately after the start, and just before end of the period T3, corresponding to the off-duty cycle of the PWM period T of the phase in which electricity is not flowing, for purposes of preventing the connection, to the positive pole of the direct current source 27, of the coils of the phase in which electricity is not flowing. Thus, at a time of switching between the drive condition of the brushless motor 11 during the period T1, corresponding to the on-duty cycle, and the brake condition of the brushless motor 11, short circuit of the coils 16-18 of plural phases can be inhibited.

In the embodiment, the dead time has been set to the predetermined time (α/2). Accordingly, the dead time can be synchronized with a time pre-set by means of a device such as a timer, in an extremely simple way.

In the embodiment, in circumstances where there is a requirement to move the brushless motor 11 slowly in low-duty conditions, when a duty ratio is low, the brake condition can be set to a longer period than the drive condition. Thus, the influence of an external force can be inhibited and the brushless motor 11 can move smoothly and slowly. In other words, a high degree of robustness of the brushless motor 11 can be secured by means of setting the brake condition at a low motor output, an operation which requires smooth, modest or low-speed motion.

On the other hand, in circumstances where there is a requirement to move the brushless motor 11 in high-duty conditions, where the duty ratio is high, a high motor output can be obtained by setting the brake condition to a shorter period than the drive condition. In other words, even when the brake condition is set, a high motor output can be obtained in the same way as in a conventional arrangement. In addition, even the brushless motor is operated at a high motor output, robustness of the brushless motor 11 can be secured by inhibiting the influence of external disturbances such as external force.

As described above, robustness can be secured only by using a duty control of the motor drive. Therefore, a conventional servo drive control (such as the PID control) can be utilized without modification, an arrangement by which a highly versatile brushless motor 11 can be obtained.

In the embodiment, when the coils 16-18 of the plural phases are short-circuited in response to a brake condition, if the braking generates enough energy to make the electric potential of the coils 16-18 higher than the electric potential of the positive pole of the direct current source 27, the energy can be reused through the direct current source 27, loss of power in the direct current source 27 can be thereby mitigated.

The embodiment can be modified as follows. In the embodiment, a low-side-drive was employed to perform the PWM control of the coil in a phase in which electricity flows at the negative pole side of the direct current source 27. A high-side-drive can be also employed to perform the PWM control of a coil in a phase in which the electricity flows at the positive terminal side of the direct current source 27. It goes without saying that in brake condition described above the coils 16-18 should be short-circuited at the negative side of the direct current source 27 in setting.

Moreover, in the embodiment, bipolar transistors were employed as the switching elements. Field effect transistors (FET), or the like, can for example also be employed. The brushless motor 11 is, moreover, not limited to a three-phase motor as in the embodiment, but can also be a 3n- (n indicates a natural number) phase motor such as a six-phase motor.

The various control roles of the controller 13 in setting the brake condition, or the like, can also be performed by the use of software, with in a system based on a digital computer. Alternatively, the controller 13 can be constructed with combinations of operational amplifiers, or the like, any various controls performed by means of hardware.

Moreover, in the embodiment, the dead time has been set to the predetermined time (α/2). However, various dead times can also be set, appropriate, for example, to both high-speed rotation and low-speed rotation of the brushless motor 11. As described above, the brake condition of the brushless motor 11 can be set so as to inhibit disturbances in a more precise manner.

The following represents technical concepts, and effects of them, which can be construed from the above embodiment, and from the variations. One is the drive control device for the direct current motor according to claim 2, wherein the dead time can be set to a predetermined time. According to this technical concept, the dead time can be synchronized with a time set by a timer, or the like, in an extremely simple way.

A further concept is the drive control device for the direct current motor according to claim 2, wherein the dead time can be changed in accordance with the drive condition. According to this technical concept, the brake condition of the direct current motor can be set to varying dead times, for high-speed rotation and low speed rotation of the direct current motor, or the like, thus inhibiting influence from external disturbances in a more precise manner.

A direct current motor (11) has plural coils (16, 17, 18) and is rotationally driven by selectively switching a phase of the coils in which electricity is flowing. A drive control device (12) for the direct current motor controls an amount of electricity applied to the coil in the phase by connecting a first terminal of the coil in the phase to a first pole of a direct current source (27) and by connecting a second terminal of the coil in the phase for a duration of a period (T1) corresponding to an on-duty cycle of a predetermined pulse width modulation period (T) of the phase. The drive control device includes a braking means for setting a brake condition to the motor by short-circuiting the coils by connecting another coil in a phase in which electricity is not flowing to the first pole of the direct current source.

## Claims

1. A drive control device (12) for a direct current motor (11) having plural coils (16, 17, 18) and rotationally driven by selectively switching a phase of the coils in which electricity is flowing, for controlling an amount of electricity applied to the coil in the phase by connecting a first terminal of the coil in the phase to a first pole of a direct current source (27) and by connecting a second terminal of the coil in the phase for a duration of a period (T1) corresponding to an on-duty cycle of a predetermined pulse width modulation period (T) of the phase, **characterized in that**
the drive control device includes a braking means for setting a brake condition to the motor by short-circuiting the coils by connecting another coil in a phase in which electricity is not flowing to the first pole of the direct current source.

2. The drive control device for the direct current motor according to claim 1, wherein the braking means sets a dead time (α/2) during which said another coil in the phase in which electricity is not flowing is disconnected from the first pole of the direct current source, either immediately after the start of or immediately before the end of, or at both times of a period corresponding to an off-duty cycle of the predetermined pulse width modulation period set for the phase of the coil in which electricity is flowing.

3. A drive control device (12) for a direct current motor (11), comprising:
a detecting means (14) for detecting a rotational position of a rotor,
a calculating means (13) for calculating a duration of a period (T1) of an on-duty cycle of a predetermined pulse width modulation period (T) so as to ensure that the detected rotational position matches a target rotational position,
a switching means (21-23, 24-26) for switching a connection between plural coils (16, 17 18) and a first pole and a second pole of a direct current source (27), and
a controlling means (12) for outputting control signals (UH, VH, WH, UL, VL, WL) to the switching means, for rotating the rotor by selectively switching a phase of the coils in which electricity is flowing, and by connecting a first terminal of the coil in the phase to a first pole of the direct current source and by connecting a second terminal of the coil in the phase to a second pole of the direct current source for a duration of the period corresponding to the calculated on-duty cycle of the predetermined pulse-width modulation period set for the phase of the coil, **characterized in that**
the control means outputs the control signals for setting brake condition of the motor by short-circuiting the coils by connecting the coil in a phase in which electricity is not flowing to the first pole of the direct current source.

4. A drive control device for a direct current motor (11) having plural coils and rotationally driven by selectively switching a phase of the coils in which electricity is flowing in accordance with a drive condition of the motor, for connecting a first terminal of the coil in the phase to a first pole of a direct current source (27) and for connecting a second terminal of the coil in the phase to a second pole of the direct current source by a switching means (21-23, 24-26), **characterized in that**
the connection between the coil in the phase and the first pole and the second pole of the direct current source is controlled by a switching element (21-23, 24-26).

5. The drive control device for the direct current motor according to claim 4, wherein the switching means includes a first switching element and a second switching element which is different from the first switching element.

6. The drive control device for the direct current motor according to claim 5, wherein the coil in the phase in which electricity is flowing is connected to a positive pole of the direct current source through the first switching element, and also to a negative pole of the direct current source through the second switching element.

7. The drive control means for the direct current motor according to claim 6, wherein the first switching element is a PNP transistor, and the second switching element is an NPN transistor.

8. The drive control device for the direct current motor according to claim 4, wherein the second pole of the direct current source supplies an amount of electricity controlled with a pulse width modulation to the coil in the phase in which electricity is flowing for a duration of a period (T1) corresponding to an on-duty cycle of a predetermined pulse width modulation period (T).

9. The drive control device for the direct current motor according to claim 4, wherein an actual rotational position is detected by a signal emitted from an angle sensor.

10. The drive control device for the direct current motor according to claim 9, wherein a pulse width modulation control is performed in order to match the actual rotational position of the motor with a target rotational position by means of feedback control based on a difference between the actual rotational position detected by the angle sensor and the target rotational position of the direct current motor.
